# FASCICULE DE BREVET EUROPEEN

(11) **EP 2 494 559 B1**
(45) Date de publication et mention de la délivrance du brevet: **26.02.2014**
(21) Numéro de dépôt: 10770830.7
(22) Date de dépôt: 27.10.2010
(51) Int. Cl.: G21C 19/46, G21F 9/06

(54) **UTILISATION DE CERTAINS ELEMENTS CHIMIQUES POUR INHIBER LA FORMATION DE PRECIPITES COMPRENANT DU MOLYBDATE DE ZIRCONIUM DANS UNE SOLUTION AQUEUSE COMPRENANT L'ELEMENT MOLYBDENE ET L'ELEMENT ZIRCONIUM**
VERWENDUNG BESTIMMTER CHEMISCHER ELEMENTE ZUR VERMEIDUNG VON AUSFÄLLUNGEN DIE ZIRCONIUMMOLYBDAT ENTHALTEN AUS EINER WÄSSRIGEN LÖSUNG ENTHALTEND MOLYBDÄN UND ZIRCONIUM
USE OF CERTAIN CHEMICAL ELEMENTS FOR INHIBITING PRECIPITATES COMPRISING ZIRCONIUMMOLYBDATE OUT OF AN AQUEOUS SOLUTION COMPRISING MOLYBDENUM AND ZIRCONIUM

(30) Priorité: 28.10.2009 FR 0957590
(43) Date de publication de la demande: 05.09.2012
(73) Titulaire: Commissariat à l'Énergie Atomique et aux Énergies Alternatives, 75015 Paris (FR); Areva NC, 75009 Paris (FR)
(72) Inventeur: MAGNALDO, Alastair, F-30330 Connaux (FR)
(74) Mandataire: Ilgart, Jean-Christophe
(86) Numéro de dépôt international: PCT/EP2010/066212
(87) Numéro de publication internationale: WO 2011/051311

(56) Documents cités:
- GB-A- 1 008 066
- US-A- 3 932 225

## Description

### DOMAINE TECHNIQUE

L'invention a trait à l'utilisation de certains éléments chimiques pour inhiber la formation de précipités comprenant du molybdate de zirconium.

Cette invention trouve tout particulièrement son application dans le domaine du retraitement des combustibles usés, où elle est susceptible d'être utilisée pour inhiber la formation de précipités comprenant du molybdate de zirconium dans des solutions nitriques de retraitement comprenant l'élément molybdène et l'élément zirconium.

### ÉTAT DE LA TECHNIQUE ANTÉRIEURE

Le molybdène et le zirconium sont deux produits de fission majeurs rencontrés lors des procédés de retraitement des combustibles usés, notamment lors des étapes de dissolution des combustibles irradiés et de concentration des produits de fission et de stockage des solutions résultantes. Au-delà d'une concentration supérieure à celle de la solubilité des éléments molybdène et zirconium dans le milieu liquide dans lequel ils se situent (généralement une solution nitrique), les formes aqueuses du molybdène et du zirconium peuvent précipiter pour former des précipités solides comprenant du molybdate de zirconium hydraté.

La formation de ces précipités peut poser principalement deux types de problème.

Le premier est la formation de couches d'encrassement, qui peuvent venir entraver le bon fonctionnement de l'appareillage mis en jeu dans le retraitement des combustibles usés, voire les endommager de façon irréversible.

Le deuxième est l'entraînement et l'accumulation d'ions secondaires dans les précipités, pouvant intervenir soit par inclusion dans ceux-ci soit par adsorption à la surface de ceux-ci. Par exemple, le plutonium est entraîné par formation de précipité de molybdates mixtes de zirconium et de plutonium. Un autre exemple est le césium, qui peut être entraîné par son adsorption sur le molybdate de zirconium. Ainsi, de façon générale, des accumulations de radioéléments et de matière fissile peuvent en résulter et ceci dans tout appareil du procédé recevant *in fine* les solutions de dissolution ou recevant du molybdate de zirconium formé en amont.

Pour remédier à ces inconvénients, des actions curatives ont été entreprises en vue d'éliminer les précipités de molybdate de zirconium formés. Ces actions curatives peuvent être d'ordre mécanique ou d'ordre chimique, notamment par dissolution des précipités formés par action de la soude ou d'une solution comprenant des ions carbonates. Mais ces solutions ont des impacts conséquents, car elles génèrent des effluents supplémentaires, qu'il convient ensuite de traiter.

A l'heure actuelle, aucune proposition technique destinée à entraver la formation de précipités comprenant du molybdate de zirconium, notamment dans des solutions de retraitement de combustibles usés, n'a été proposée dans la littérature. Les seules études relatives au molybdate de zirconium dans le procédé de retraitement des combustibles usés se sont focalisées sur les cinétiques de formation de précipité en fonction des conditions opératoires de température, d'acidité et de concentration. D'autres études plus générales ont décrit les applications éventuelles du molybdate de zirconium en tant que catalyseur, échangeur d'ions, produit intermédiaire pour la formation de ZrMO₂O₈.

Il existe donc un véritable besoin pour une solution technique permettant de diminuer, voire d'empêcher la formation de précipités comprenant du molybdate de zirconium dans une solution aqueuse, telle qu'une solution nitrique, comprenant l'élément molybdène et l'élément zirconium autre qu'en jouant sur les conditions opératoires de température, d'acidité et de concentration.

### EXPOSÉ DE L'INVENTION

Les inventeurs ont ainsi découvert, de manière surprenante, que certains éléments chimiques pouvaient contribuer à inhiber la formation de précipité comprenant du molybdate de zirconium dans une solution aqueuse comprenant l'élément molybdène et l'élément zirconium.

L'invention a donc trait à l'utilisation d'au moins un élément chimique choisi parmi le plutonium, le tellure, l'antimoine et les mélanges de ceux-ci pour inhiber la formation d'un précipité comprenant du molybdate de zirconium dans une solution aqueuse comprenant l'élément molybdène et l'élément zirconium.

Avant d'entrer plus en détail dans la description, nous précisons les définitions suivantes.

Par précipité, on entend classiquement, un corps solide insoluble formé à partir d'au moins deux éléments chimiques solubles (ici, le molybdène et le zirconium) présents en une certaine proportion en solution aqueuse, la formation de ce corps intervenant une fois que la limite de solubilité des éléments chimiques susmentionnés a été dépassée. La formation d'un précipité fait intervenir, classiquement deux phénomènes :
- un premier phénomène de nucléation, au cours duquel les éléments chimiques réagissent entre eux, pour former des noyaux solides précurseurs du précipité ;
- un second phénomène dit de croissance cristalline de cristallites à partir des noyaux solides préalablement formés.

Par inhibition, on entend, classiquement, l'action d'entraîner la diminution voire la suppression de la formation de précipités comprenant du molybdate de zirconium.

Sans vouloir être lié par la théorie, certains des éléments listés ci-dessus vont impliquer des modifications chimiques du précipité comprenant du molybdate de zirconium. Ainsi, à titre d'exemple, le plutonium sous sa forme Pu (IV) se substitue au moins en partie au zirconium dans le molybdate de zirconium, pour donner du molybdate mixte de plutonium et de zirconium beaucoup plus soluble que le molybdate de zirconium, par exemple, dans une solution d'acide nitrique. Il s'ensuit un accroissement rapide de la solubilité de la solution solide avec le rapport Pu(IV)/(Zr+Pu(IV)) et donc une diminution de la force chimique de précipitation.

En particulier, la solution aqueuse de l'invention peut être une solution d'acide nitrique, pouvant être issue notamment de la dissolution par l'acide nitrique d'un combustible nucléaire usé. La solution d'acide nitrique peut, par exemple, présenter une normalité de 0,5 à 6 N et peut présenter une température allant de 20°C à la température d'ébullition de celle-ci.

Les éléments utilisés en tant qu'inhibiteur dans le cadre de l'invention présentent l'avantage de ne pas être des inhibiteurs organiques ou encore des inhibiteurs comprenant des groupes phosphates, ces inhibiteurs ayant pour particularité d'être peu stables, notamment en milieu nitrique. Qui plus est, les inhibiteurs comprenant des groupes phosphates pourraient entraîner la précipitation du plutonium, du zirconium ou du molybdène sous forme de phosphates de ces éléments.

Avantageusement, selon l'invention, l'élément chimique apte à inhiber la formation du molybdate de zirconium est le plutonium de valence (IV), le tellure de valence (VI), l'antimoine et les mélanges de ceux-ci.

Les éléments inhibiteurs susmentionnés peuvent être des éléments déjà présents dans les solutions de retraitement des combustibles usés. Ainsi, l'opération d'inhibition peut ainsi consister, tout au plus, lorsque la quantité d'élément (s) susmentionnés n'est pas suffisante dans la solution initiale, à introduire dans le milieu comprenant l'élément molybdène et l'élément zirconium, une quantité supplémentaire de l'élément inhibiteur déjà présent dans ladite solution, de sorte à augmenter sa concentration.

Cette quantité supplémentaire peut provenir, par exemple, d'un flux de recyclage comprenant ledit élément. Ainsi, dans ce cas, l'élément inhibiteur est déjà présent dans le procédé de retraitement classique et ne perturbe ainsi pas son fonctionnement.

D'un point de vue concret, l'invention peut être mise en oeuvre par un procédé d'inhibition comprenant une étape de mise en contact d'une solution aqueuse comprenant l'élément molybdène et l'élément zirconium avec au moins une quantité prédéterminée d'au moins un élément choisi parmi le plutonium, le tellure, l'antimoine et/ou des mélanges de ceux-ci, la quantité prédéterminée étant choisie de sorte à inhiber la formation du précipité comprenant du molybdate de zirconium.

Cette quantité prédéterminée peut être déterminée en procédant aux essais suivantes :
- un essai comparatif avec une solution comprenant du molybdène et du zirconium et ne comprenant pas d'élément inhibiteur tel que mentionné ci-dessus et au cours duquel on mesure la quantité formée du précipité comprenant du molybdate de zirconium formé ;
- des essais avec la même solution dans laquelle on introduit au moins un élément inhibiteur tel que mentionné ci-dessus en différentes quantités et au cours desquels on mesure la quantité formée de précipité comprenant du molybdate de zirconium.

De ces essais, on peut en déduire la quantité prédéterminée à introduire pour obtenir une diminution voire une suppression de la formation du précipité comprenant du molybdate de zirconium.

A titre d'exemple, l'élément tellure est apte à inhiber la formation de molybdate de zirconium pour une concentration en élément tellure allant de 0,05 à 1 g.L⁻¹ pour une solution d'acide nitrique présentant une normalité de 0,5 à 6 N comprenant l'élément molybdène à une concentration de 0,5 à 6 g.L⁻¹ et l'élément zirconium à une concentration de 0,5 à 6 g.L⁻¹.

A titre d'exemple, l'élément plutonium est apte à inhiber la formation de molybdate de zirconium pour une concentration en élément plutonium allant de 1 à 50 g.L⁻¹ pour une solution d'acide nitrique présentant une normalité de 0,5 à 6 N comprenant l'élément molybdène à une concentration de 0,5 à 6 g.L⁻¹ et l'élément zirconium à une concentration de 0,5 à 6 g.L⁻¹.

Lorsque l'invention s'applique au domaine du retraitement des combustibles usés, elle peut être mise en oeuvre de façon concrète par un procédé de retraitement d'un combustible usé comprenant l'élément molybdène et l'élément zirconium comprenant les étapes suivantes :
- une étape de dissolution dans l'acide nitrique du combustible nucléaire usé, moyennant quoi l'on obtient une solution comprenant l'élément molybdène et l'élément zirconium dans des quantités aptes à générer la formation d'un précipité comprenant du molybdate de zirconium ;
- une étape d'ajout à cette solution d'au moins un élément choisi parmi le plutonium, le tellure, l'antimoine et les mélanges de ceux-ci, de sorte à atteindre dans la solution susmentionnée une concentration dudit élément nécessaire à l'inhibition de formation du précipité comprenant du molybdate de zirconium.

A titre d'exemple, la quantité d'élément tellure à ajouter dans la solution est choisie de sorte à obtenir, dans ladite solution, une concentration en élément tellure allant de 0,05 à 1 g.L⁻¹ pour une solution d'acide nitrique présentant une normalité de 0,5 à 6 N comprenant l'élément molybdène à une concentration de 0,5 à 6 g.L⁻¹ et l'élément zirconium à une concentration de 0,5 à 6 g.L⁻¹.

A titre d'exemple, la quantité d'élément plutonium à ajouter dans la solution est choisie de sorte à obtenir, dans ladite solution, une concentration en élément plutonium allant de 1 à 50 g.L⁻¹ pour une solution d'acide nitrique présentant une normalité de 0,5 à 6 N comprenant l'élément molybdène à une concentration de 0,5 à 6 g.L⁻¹ et l'élément zirconium à une concentration de 0,5 à 6 g.L⁻¹.

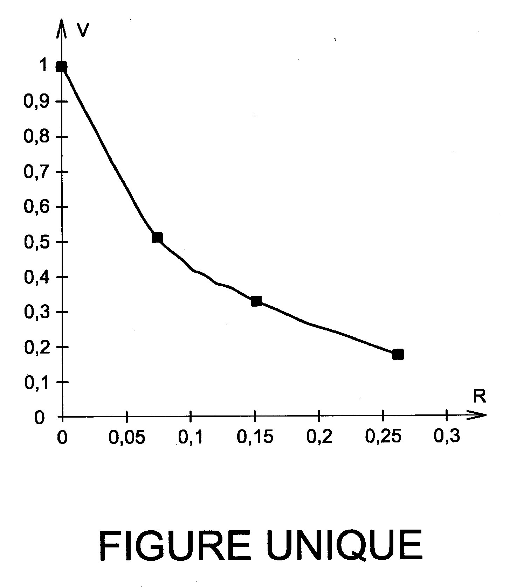

L'invention sera mieux comprise à la lumière du complément de description qui suit, qui se rapporte à deux exemples de mise en oeuvre de l'invention et qui se réfère à la figure annexée.

Bien entendu, ce complément de description n'est donné qu'à titre d'illustration de l'objet de l'invention et ne constitue en aucun cas une limitation de cet objet.

### BRÈVE DESCRIPTION DES DESSINS

La figure unique représente un graphique illustrant l'évolution de la vitesse relative (V) de croissance cristalline du molybdate de zirconium en fonction du rapport molaire (R) Te/Mo conformément aux conditions opératoires appliquées à l'exemple 2.

### EXPOSÉ DÉTAILLÉ DE MODES DE RÉALISATION PARTICULIERS

### EXEMPLE 1

Cet exemple illustre l'utilisation du plutonium sous son degré d'oxydation (IV) pour inhiber la formation de molybdate de zirconium dans une solution nitrique comprenant l'élément molybdène et l'élément zirconium.

Pour ce faire, deux solutions d'acide nitrique 3N ont été préparées à froid :
- une première solution comprenant du molybdène et du zirconium à 0,7 g.L⁻¹;
- une deuxième solution comprenant, outre du molybdène et du zirconium à raison de 0,7 g.L⁻¹, du plutonium sous son degré d'oxydation (IV) à raison d'1 g_{.}L⁻¹_{.}

Ces deux solutions sont chauffées, en parallèle, et maintenues à 87°C. La première solution précipite au bout d'une heure environ. La deuxième solution ne précipite pas, même à l'issue d'une durée de chauffage d'au moins 6 heures.

### EXEMPLE 2

Cet exemple illustre l'utilisation du tellure Te sous son degré d'oxydation (VI) pour inhiber la formation de molybdate de zirconium dans une solution nitrique comprenant l'élément molybdène et l'élément zirconium.

Pour ce faire, on prépare une solution d'acide nitrique 3N comprenant 0,8 g.L⁻¹ de molybdène et 0,8 g.L⁻¹ de zirconium, c'est-à-dire des concentrations proches de celles que l'on peut rencontrer lors de la dissolution de combustibles irradiés.

A cette solution, on introduit du tellure sous son degré d'oxydation (VI) sous forme d'acide tellurique et on mesure la vitesse relative (V) de croissance cristalline du molybdate de zirconium en fonction de la concentration en Te (VI)(en g.L⁻¹) avec dans un réacteur circulaire comprenant les éléments suivantes :
- une microbalance à cristaux de quartz située sur la partie latérale du réacteur ;
- un dispositif d'agitation permettant de garantir des conditions de croissance non limitées par la diffusion moléculaire ;
- d'une entrée permettant l'introduction de la solution.

La microbalance à cristaux de quartz et son analyseur associé (QCA-917, EG&G) permettent d'obtenir au contact de la solution des valeurs d'amplitude et de fréquence de résonance. Par application d'un modèle, il est possible d'extraire de ces valeurs les variations de masse et densité-viscosité et de relier ces variations à la quantité formée de précipité.

Les mesures sont reportées sur la figure unique. Par exemple, on peut constater que la croissance cristalline est ralentie d'un facteur proche de 6, lorsque le rapport molaire Te/Mo est de (1/4), soit environ 0,27 g.L⁻¹ en Te. Aucun autre corps n'est formé en solution.

### EXEMPLE 3

Cet exemple illustre l'utilisation d'antimoine (Sb) pour retarder le moment de nucléation et les cinétiques de croissance des molybdates de zirconium dans une solution nitrique contenant l'élément molybdène et l'élément zirconium.

Pour ce faire, on prépare une solution d'acide nitrique comprenant environ 2 g.L⁻¹ de molybdène et environ 2 g.L⁻¹ de zirconium.

A cette solution, on ajoute de l'antimoine à un degré d'oxydation mixte entre (V) et (VI) sous la forme d'une solution à forte concentration nitrique et forte concentration en antimoine, de façon à constituer une solution finale comprenant une acidité nitrique de 3 N avec 2 g.L⁻¹ de molybdène, 2 g.L⁻¹ de zirconium et 0,2 g.L⁻¹ d'antimoine.

La solution est portée à une température de 80 °C, et le temps d'apparition des premiers cristaux est observé.

En présence d'antimoine, la solution commence à précipiter et devient trouble au bout de 180 minutes, au lieu de 20 minutes pour une solution identique mais sans antimoine.

L'observation microscopique des cristaux formés en présence d'antimoine montre une très forte variation du faciès cristallin (des aiguilles) par rapport aux cristaux formés sans la présence d'antimoine (des cubes).

## Revendications

1. Utilisation d'au moins un élément chimique choisi parmi le plutonium, le tellure, l'antimoine et les mélanges de ceux-ci pour inhiber la formation d'un précipité comprenant du molybdate de zirconium dans une solution aqueuse comprenant l'élément molybdène et l'élément zirconium.

2. Utilisation selon la revendication 1, dans laquelle l'élément chimique est choisi parmi le plutonium de valence (IV), le tellure de valence (VI), l'antimoine et les mélanges de ceux-ci.

3. Utilisation selon la revendication 1 ou 2, dans laquelle la solution aqueuse est une solution d'acide nitrique.

4. Utilisation selon la revendication 3, dans laquelle la solution d'acide nitrique est issue de la dissolution par l'acide nitrique d'un combustible nucléaire usé.

5. Utilisation selon la revendication 3 ou 4, dans laquelle la solution d'acide nitrique présente une normalité allant de 0,5 à 6 N.

6. Utilisation selon l'une quelconque des revendications 3 à 5, dans laquelle la solution d'acide nitrique présente une température allant de 20°C à la température d'ébullition de celle-ci.

7. Utilisation selon l'une quelconque des revendications précédentes, dans laquelle l'élément chimique est le plutonium de valence (IV).

8. Utilisation selon l'une quelconque des revendications 1 à 7, dans lequel l'élément plutonium présente une concentration allant de 1 à 50 g.L⁻¹ pour une solution d'acide nitrique présentant une normalité de 0,5 à 6 N comprenant l'élément molybdène à une concentration de 0,5 à 6 g.L⁻¹ et l'élément zirconium à une concentration de 0,5 à 6 g.L⁻¹.

9. Utilisation selon l'une quelconque des revendications 1 à 6, dans laquelle l'élément chimique est le tellure de valence (VI).

10. Utilisation selon l'une quelconque des revendications 1 à 6 et 9, dans lequel l'élément tellure présente une concentration allant de 0,05 à 1 g.L⁻¹ pour une solution d'acide nitrique présentant une normalité de 0,5 à 6 N comprenant l'élément molybdène à une concentration de 0,5 à 6 g.L⁻¹ et l'élément zirconium à une concentration de 0,5 à 6 g.L⁻¹.

11. Procédé de retraitement d'un combustible usé comprenant l'élément molybdène et l'élément zirconium comprenant successivement les étapes suivantes :
- une étape de dissolution dans l'acide nitrique du combustible nucléaire usé, moyennant quoi l'on obtient une solution comprenant l'élément molybdène et l'élément zirconium dans des quantités aptes à générer la formation d'un précipité comprenant du molybdate de zirconium ;
- une étape d'ajout à cette solution d'au moins un élément choisi parmi le plutonium, le tellure, l'antimoine et les mélanges de ceux-ci, de sorte à atteindre dans la solution susmentionnée une concentration dudit élément nécessaire à l'inhibition de formation du précipité comprenant du molybdate de zirconium.

12. Procédé selon la revendication 11, dans lequel, pour une solution d'acide nitrique présentant une normalité de 0,5 à 6 N comprenant l'élément molybdène à une concentration de 0,5 à 6 g.L⁻¹ et l'élément zirconium à une concentration de 0,5 à 6 g.L⁻¹, l'élément tellure est ajouté, lors de l'étape d'ajout, en une quantité de sorte à obtenir une concentration en élément tellure allant de 0,05 à 1 g.L⁻¹.

13. Procédé selon la revendication 11, dans lequel, pour une solution d'acide nitrique présentant une normalité de 0,5 à 6 N comprenant l'élément molybdène à une concentration de 0,5 à 6 g.L⁻¹ et l'élément zirconium à une concentration de 0,5 à 6 g.L⁻¹, l'élément plutonium est ajouté, lors de l'étape d'ajout, en une quantité de sorte à obtenir une concentration en élément plutonium allant de 1 à 50 g.L⁻¹_{.}

## Patentansprüche

1. Verwendung von wenigstens einem chemischen Element, ausgewählt aus Plutonium, Tellur, Antimon und Mischungen daraus, um die Bildung einer Zirkoniummolybdat enthaltenden Ausfällung in einer wässrigen Lösung zu hemmen, welche das Element Molybdän und das Element Zirkonium enthält.

2. Verwendung nach Anspruch 1, wobei das chemische Element ausgewählt ist aus Plutonium mit Valenz (IV), Tellur mit Valenz (VI), Antimon und Mischungen daraus.

3. Verwendung nach Anspruch 1 oder 2, wobei die wässrige Lösung eine Salpetersäure-Lösung ist.

4. Verwendung nach Anspruch 3, wobei die Salpetersäure-Lösung aus der Auflösung eines gebrauchten nuklearen Brennstoffs durch Salpetersäure stammt.

5. Verwendung nach Anspruch 3 oder 4, wobei die Salpetersäure-Lösung eine Normalität von 0,5 bis 6 N aufweist.

6. Verwendung nach einem der Ansprüche 3 bis 5, wobei die Salpetersäure-Lösung eine Temperatur von 20 °C bis zu dem Siedepunkt davon aufweist.

7. Verwendung nach einem der vorhergehenden Ansprüche, wobei das chemische Element Plutonium mit Valenz (IV) ist.

8. Verwendung nach einem der Ansprüche 1 bis 7, wobei das Element Plutonium eine Konzentration von 1 bis 50 g·L⁻¹ aufweist, für eine Salpetersäure-Lösung mit einer Normalität von 0,5 bis 6 N, umfassend das Element Molybdän in einer Konzentration von 0,5 bis 6 g·L⁻¹ und das Element Zirkonium in einer Konzentration von 0,5 bis 6 g·L⁻¹.

9. Verwendung nach einem der Ansprüche 1 bis 6, wobei das chemische Element Tellur mit Valenz (VI) ist.

10. Verwendung nach einem der Ansprüche 1 bis 6 und 9, wobei das Element Tellur eine Konzentration von 0,05 bis 1 g·L⁻¹ aufweist, für eine Salpetersäure-Lösung mit einer Normalität von 0,5 bis 6 N, umfassend das Element Molybdän in einer Konzentration von 0,5 bis 6 g·L⁻¹ und das Element Zirkonium in einer Konzentration von 0,5 bis 6 g·L⁻¹ .

11. Verfahren zur Wiederaufbereitung von einem verbrauchten Brennstoff, der das Element Molybdän und das Element Zirkonium umfasst, umfassend nacheinander die folgenden Schritte:
- einen Schritt der Auflösung des verbrauchten nuklearen Brennstoffs in Salpetersäure, was dazu führt, dass eine Lösung erhalten wird, welche das Element Molybdän und das Element Zirkonium in Mengen enthält, die dazu geeignet sind, die Bindung einer Ausfällung zu erzeugen, welche Zirkoniummolybdat enthält,
- einen Schritt des Hinzufügens von wenigstens einem Element zu dieser Lösung, das ausgewählt ist aus Plutonium, Tellur, Antimon und den Mischungen daraus, so dass in der vorstehend erwähnten Lösung eine Konzentration des Elements erhalten wird, die notwendig ist, um die Bildung der Zirkoniummolybdat enthaltenden Ausfällung zu hemmen.

12. Verfahren nach Anspruch 11, wobei für eine Salpetersäure-Lösung mit einer Normalität von 0,5 bis 6 N, umfassend das Element Molybdän in einer Konzentration von 0,5 bis 6 g·L⁻¹ und das Element Zirkonium in einer Konzentration von 0,5 bis 6 g·L⁻¹, beim Schritt des Hinzufügens das Element Tellur in solch einer Menge hinzugefügt wird, dass eine Konzentration des Elements Tellur von 0,05 bis 1 g·L⁻¹ erhalten wird.

13. Verfahren nach Anspruch 11, wobei für eine Salpetersäure-Lösung mit einer Normalität von 0,5 bis 6 N, welche das Element Molybdän in einer Konzentration von 0,5 bis 6 g·L⁻¹ und das Element Zirkonium in einer Konzentration von 0,5 bis 6 g·L⁻¹ umfasst, beim Schritt des Hinzufügens das Element Plutonium in solch einer Menge hinzugefügt wird, dass eine Konzentration des Elements Plutonium von 1 bis 50 g·L⁻¹ erhalten wird.

## Claims

1. The use of at least one chemical element selected from plutonium, tellurium, antimony and mixtures thereof for inhibiting the formation of a precipitate comprising zirconium molybdate in an aqueous solution comprising the element molybdenum and the element zirconium.

2. The use according to claim 1, wherein the chemical element is selected from plutonium with valence (IV), tellurium with valence (VI), antimony and mixtures thereof.

3. The use according to claim 1 or 2, wherein the aqueous solution is a nitric acid solution.

4. The use according to claim 3, wherein the nitric acid solution stems from the dissolution of a used nuclear fuel by nitric acid.

5. The use according to claim 3 or 4, wherein the nitric acid solution has normality ranging from 0.5 to 6 N.

6. The use according to any of claims 3 to 5, wherein the nitric acid solution has a temperature ranging from 20°C to the boiling temperature of the latter.

7. The use according to any of the preceding claims, wherein the chemical element is plutonium with valence (IV).

8. The use according to any of claims 1 to 7, wherein the element plutonium has a concentration ranging from 1 to 50 g.L⁻¹ for a nitric acid solution having a normality from 0.5 to 6 N comprising the element molybdenum as a concentration from 0.5 to 6 g.L⁻¹ and the element zirconium at a concentration from 0.5 to 6 g.L⁻¹.

9. The use according to any of claims 1 to 6, wherein the chemical element is tellurium with valence (VI).

10. The use according to any of claims 1 to 6 and 9, wherein the element tellurium has a concentration ranging from 0.05 to 1 g.L⁻¹ for a nitric acid solution having normality from 0.5 to 6 N comprising the element molybdenum at a concentration from 0.5 to 6 g.L⁻¹ and the element zirconium at a concentration from 0.5 to 6 g.L⁻¹.

11. A method for reprocessing a used fuel comprising the element molybdenum and the element zirconium, successively comprising the following steps:
- a step for dissolving the used nuclear fuel into nitric acid, by which a solution is obtained comprising the element molybdenum and the element zirconium in amounts capable of generating the formation of a precipitate comprising zirconium molybdate;
- a step for adding to the solution at least one element selected from plutonium, tellurium, antimony and mixtures thereof so as to attain in the aforementioned solution a concentration of said element required for inhibiting the formation of the precipitate comprising zirconium molybdate.

12. The method according to claim 11, wherein, for a solution of nitric acid having a normality from 0.5 to 6 N comprising the element molybdenum at a concentration from 0.5 to 6 g.L⁻¹ and the element zirconium at a concentration from 0.5 to 6 g.L⁻¹, the element tellurium is added, during the addition step, in an amount so as to obtain a concentration of the element tellurium ranging from 0.05 to 1 g.L⁻¹_{.}

13. The method according to claim 11, wherein, for a nitric acid solution having a normality from 0.5 to 6 N, comprising the element molybdenum at a concentration from 0.5 to 6 g.L⁻¹ and the element zirconium at a concentration from 0.5 to 6 g.L⁻¹, the element plutonium is added, during the addition step, in an amount so as to obtain a plutonium element concentration ranging from 1 to 50 g.L⁻¹.
